# EUROPEAN PATENT SPECIFICATION

(11) **EP 4 621 714 B1**
(45) Date of publication and mention of the grant of the patent: **18.11.2026**
(21) Application number: 25158525.3
(22) Date of filing: 18.02.2025
(51) Int. Cl.: G06T 7/32

(54) **IMAGE PROCESSING APPARATUS, IMAGE PROCESSING METHOD, AND IMAGE PROCESSING PROGRAM**
BILDVERARBEITUNGSVORRICHTUNG, BILDVERARBEITUNGSVERFAHREN UND BILDVERARBEITUNGSPROGRAMM
APPAREIL, PROCÉDÉ ET PROGRAMME DE TRAITEMENT D'IMAGE

(30) Priority: 21.03.2024 JP 2024045746
(43) Date of publication of application: 24.09.2025
(73) Proprietor: FUJIFILM Corporation, Tokyo 106-8620 (JP)
(72) Inventor: HIASA, Yuta, Tokyo 106-8620 (JP)
(74) Representative: Dehns Germany Partnerschaft mbB

(56) References cited:
- US-A1- 2008 279 430
- US-A1- 2016 302 747
- US-A1- 2020 107 884
- ANONYMOUS: "Register Images Using Registration Estimator App - MATLAB & Simulink", MATLAB HELP CENTER, 16 March 2021 (2021-03-16), XP093289994, Retrieved from the Internet <URL:https://www.mathworks.com/help/images/register-images-using-the-registration-estimator-app.html>

## Description

### BACKGROUND OF THE INVENTION

### 1. Field of the Invention

The present disclosure relates to an image processing apparatus, an image processing method, and an image processing program.

### 2. Description of the Related Art

JP2014-171867A discloses a technology of performing first registration related to registration between a first image data set and a second image data set and second registration related to registration between the first image data set and the second image data set that is different from the first registration.

A system and a method for enabling intra-operative selection of an image registration transformation for use in displaying a first image dataset and a second image dataset in correspondence with one another are described in patent application US 2008/279430 A1, published on November 13, 2008.

A method that allows using a first imaging modality (such as CT, MRI, etc.) and planning information by generating an augmented image using a second imaging modality (such as fluoroscopy, digital subtraction angiography) is described in patent application US 2016/302747 A1, published on October 20, 2016.

### SUMMARY OF THE INVENTION

Registration between a plurality of images may not be efficiently performed. For example, in a transbronchial lung biopsy in a medical field, an operation support using a three-dimensional medical image and a two-dimensional medical image is performed. In a problem of registration between the three-dimensional image and the two-dimensional image, an objective function is generally multimodal, and a registration result may fall into a local optimal solution. In this case, accuracy of the registration between the images is reduced. Meanwhile, in a case where a user is caused to perform the registration between the images, a burden on the user increases.

The present disclosure has been made in view of the above circumstances, and an object of the present disclosure is to provide an image processing apparatus, an image processing method, and an image processing program capable of suppressing a decrease in accuracy of registration between images while suppressing an increase in a burden on a user.

The invention is set out in the appended claims.

An image processing apparatus according to a first aspect is an image processing apparatus comprising at least one processor, in which the processor is configured to: acquire a first image, and a second image different from the first image and having an imaging range of which at least a part overlaps with an imaging range of the first image; derive a first transformation parameter for projecting the first image onto an image space of the second image by performing registration between the first image and the second image; perform a control of displaying a first composite image in which the first image is superimposed on the second image using the first transformation parameter; receive a user input representing validity of the first composite image; acquire a second transformation parameter different from the first transformation parameter in a case where the user input represents that the first composite image is not valid; and perform a control of displaying a second composite image obtained by composing a plurality of images using one or more of the first transformation parameter and the second transformation parameter.

In an image processing apparatus according to a second aspect, in the image processing apparatus according to the first aspect, the processor is configured to generate the first composite image in which one or more regions of interest included in the first image are superimposed on the second image using the first transformation parameter.

In an image processing apparatus according to a third aspect, in the image processing apparatus according to the second aspect, the processor is configured to perform a control of displaying the region of interest in the first composite image in a display aspect in which the region of interest is identifiable.

In an image processing apparatus according to a fourth aspect, in the image processing apparatus according to any one of the first to third aspects, the processor is configured to: derive a plurality of sets of the first transformation parameters by performing the registration between the first image and the second image; select one first transformation parameter from among the derived plurality of sets of the first transformation parameters; perform the control of displaying the first composite image in which the first image is superimposed on the second image using the selected one first transformation parameter; and acquire the second transformation parameter different from the first transformation parameter from among the plurality of sets of the first transformation parameters in a case where the user input represents that the first composite image is not valid.

In an image processing apparatus according to a fifth aspect, in the image processing apparatus according to the fourth aspect, the processor is configured to: perform a control of displaying a third composite image in which the first image is superimposed on the second image using one or more transformation parameters other than the first transformation parameter used to generate the first composite image from among the plurality of sets of the first transformation parameters in a case where the user input represents that the first composite image is not valid; and acquire the transformation parameter used to generate the third composite image selected by a user as the second transformation parameter.

In an image processing apparatus according to a sixth aspect, in the image processing apparatus according to the fifth aspect, the processor is configured to perform, in the control of displaying the third composite image, a control of displaying information representing a difference between the first composite image and the third composite image.

In an image processing apparatus according to a seventh aspect, in the image processing apparatus according to the sixth aspect, the information representing the difference is a difference between the first composite image and the third composite image in pixel units.

In an image processing apparatus according to an eighth aspect, the image processing apparatus according to the sixth aspect, the processor is configured to: acquire a landmark set on the first image; and perform a control of displaying information representing a difference between the landmark superimposed on the first composite image using the first transformation parameter and the landmark superimposed on the third composite image using the one or more transformation parameters as the information representing the difference.

In an image processing apparatus according to a ninth aspect, in the image processing apparatus according to the fourth aspect, the processor is configured to: cluster all the first transformation parameters derived by performing the registration between the first image and the second image; and derive transformation parameters representing each cluster as the plurality of sets of the first transformation parameters.

In an image processing apparatus according to a tenth aspect, in the image processing apparatus according to the fourth aspect, the processor is configured to derive the plurality of sets of the first transformation parameters by performing the registration between the first image and the second image using a plurality of different methods.

In an image processing apparatus according to an eleventh aspect, in the image processing apparatus according to the fourth aspect, the processor is configured to set each of a plurality of different sets of initial transformation parameters and search ranges and derive the plurality of sets of the first transformation parameters by repeatedly performing the registration between the first image and the second image.

In an image processing apparatus according to a twelfth aspect, in the image processing apparatus according to any one of the first to eleventh aspects, the first image is a three-dimensional medical image captured before a surgery.

In an image processing apparatus according to a thirteenth aspect, in the image processing apparatus according to any one of the first to twelfth aspects, the second image is a two-dimensional medical image captured during a surgery.

In an image processing apparatus according to a fourteenth aspect, in the image processing apparatus according to the second or third aspect, the region of interest is a region of a main bronchial part of a bronchus, a region of a pulmonary artery, a contour of a lung field, or a region of a pulmonary nodule.

An image processing method according to a fifteenth aspect, the image processing method for executing a process by a processor included in an image processing apparatus, the process comprising: acquiring a first image, and a second image different from the first image and having an imaging range of which at least a part overlaps with an imaging range of the first image; deriving a first transformation parameter for projecting the first image onto an image space of the second image by performing registration between the first image and the second image; performing a control of displaying a first composite image in which the first image is superimposed on the second image using the first transformation parameter; receiving a user input representing validity of the first composite image; acquiring a second transformation parameter different from the first transformation parameter in a case where the user input represents that the first composite image is not valid; and performing a control of displaying a second composite image obtained by composing a plurality of images using one or more of the first transformation parameter and the second transformation parameter.

An image processing program according to a sixteenth aspect causes a processor included in an image processing apparatus to execute a process comprising: acquiring a first image, and a second image different from the first image and having an imaging range of which at least a part overlaps with an imaging range of the first image; deriving a first transformation parameter for projecting the first image onto an image space of the second image by performing registration between the first image and the second image; performing a control of displaying a first composite image in which the first image is superimposed on the second image using the first transformation parameter; receiving a user input representing validity of the first composite image; acquiring a second transformation parameter different from the first transformation parameter in a case where the user input represents that the first composite image is not valid; and performing a control of displaying a second composite image obtained by composing a plurality of images using one or more of the first transformation parameter and the second transformation parameter.

According to the present disclosure, it is possible to suppress a decrease in accuracy of registration between images while suppressing an increase in a burden on a user.

### BRIEF DESCRIPTION OF THE DRAWINGS

Fig. 1 is a diagram showing an example of a medical information system.
Fig. 2 is a block diagram showing an example of a hardware configuration of an image processing apparatus.
Fig. 3 is a block diagram showing an example of a functional configuration of the image processing apparatus.
Fig. 4 is a diagram for describing clustering of transformation parameters.
Fig. 5 is a diagram showing an example of a display screen of a first composite image.
Fig. 6 is a diagram showing an example of a display screen of a third composite image.
Fig. 7 is a diagram showing an example of the display screen of the third composite image.
Fig. 8 is a diagram showing an example of the display screen of the third composite image.
Fig. 9 is a diagram showing an example of a display screen of a second composite image.
Fig. 10 is a flowchart showing an example of insertion support processing.

### DESCRIPTION OF THE PREFERRED EMBODIMENTS

Hereinafter, examples of an embodiment for implementing the technology of the present disclosure will be described in detail with reference to the drawings.

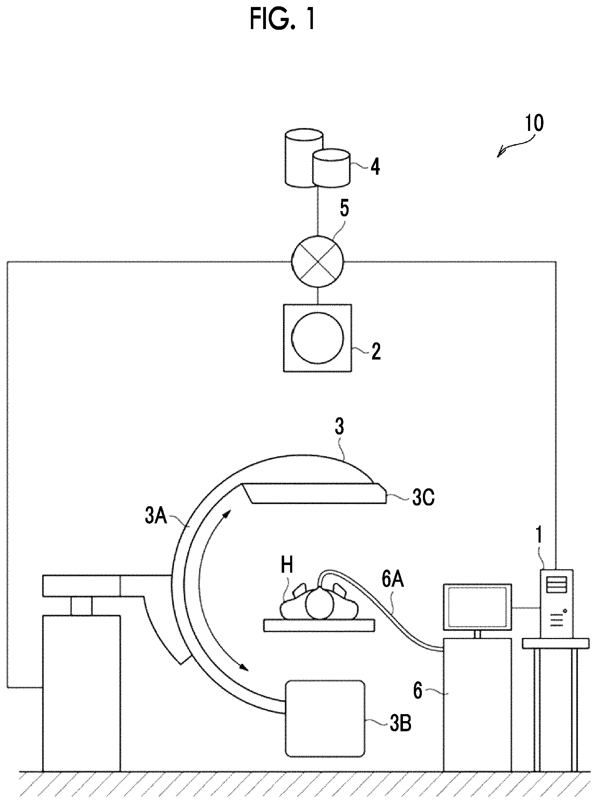

First, a configuration of a medical information system 10 will be described with reference to Fig. 1. As shown in Fig. 1, the medical information system 10 includes an image processing apparatus 1, a three-dimensional image capturing apparatus 2, a fluoroscopic image capturing apparatus 3, and an image storage server 4. The image processing apparatus 1, the three-dimensional image capturing apparatus 2, the fluoroscopic image capturing apparatus 3, and the image storage server 4 are connected to each other in a communicable state via a network 5.

The three-dimensional image capturing apparatus 2 generates a three-dimensional medical image showing a diagnosis target part of a subject H by imaging the part. Examples of the three-dimensional image capturing apparatus 2 include a CT apparatus, a magnetic resonance imaging (MRI) apparatus, and a positron emission tomography (PET) apparatus. The three-dimensional medical image including a plurality of tomographic images, which is generated by the three-dimensional image capturing apparatus 2, is transmitted to and stored in the image storage server 4. In the present embodiment, a case where the target part of the subject H is a lung and the three-dimensional image capturing apparatus 2 is a CT apparatus will be described as an example. That is, the three-dimensional medical image according to the present embodiment is a CT image. In addition, in the present embodiment, it is assumed that a three-dimensional medical image including the chest of the subject H is acquired in advance by imaging the chest of the subject H with the three-dimensional image capturing apparatus 2 before the treatment on the subject H (that is, before the surgery). The three-dimensional medical image is an example of a first image according to the disclosed technology.

The fluoroscopic image capturing apparatus 3 includes a C-arm 3A, an X-ray source 3B, and an X-ray detector 3C. The X-ray source 3B and the X-ray detector 3C are attached to both end parts of the C-arm 3A, respectively. In the fluoroscopic image capturing apparatus 3, the C-arm 3A is configured to be rotatable and movable such that the subject H can be imaged from any direction. The fluoroscopic image capturing apparatus 3 sequentially acquires radiation images of the subject H by performing fluoroscopic imaging in which the subject H is continuously irradiated with X-rays as an example of radiation in accordance with a predetermined frame rate during the treatment on the subject H, and the X-rays transmitted through the subject H are sequentially detected by the X-ray detector 3C. In the following description, the radiation images of each frame that are sequentially acquired will be referred to as fluoroscopic images. The fluoroscopic image obtained by the radioscopy with the fluoroscopic image capturing apparatus 3 is an example of a two-dimensional medical image according to the disclosed technology.

The image storage server 4 is a computer that stores and manages various data, and comprises a large-capacity external storage device and software for database management. The image storage server 4 communicates with other apparatuses via the wired or wireless network 5 and transmits and receives image data and the like. Specifically, various data including image data indicating the three-dimensional medical image acquired by the three-dimensional image capturing apparatus 2 and the fluoroscopic image acquired by the fluoroscopic image capturing apparatus 3 is acquired via the network 5, and managed by being stored in a recording medium such as a large-capacity external storage device. In addition, the storage format of the image data and the communication between the apparatuses through the network 5 are based on a protocol such as Digital Imaging and Communication in Medicine (DICOM).

In the present embodiment, a case where a biopsy treatment is performed in which while performing fluoroscopic imaging of the subject H, a part of a lesion such as a pulmonary nodule existing in the lung of the subject H is excised to examine the presence or absence of a disease in detail will be described as an example. For this reason, the fluoroscopic image capturing apparatus 3 is disposed in a treatment room for performing a biopsy. That is, the fluoroscopic image is captured during the surgery. The fluoroscopic image is an example of a second image according to the disclosed technology. In addition, an ultrasonic endoscope apparatus 6 is installed in the treatment room. The ultrasonic endoscope apparatus 6 comprises an endoscope 6A to which a treatment tool such as an ultrasound probe and a forceps is attached to a distal end thereof. In the present embodiment, a user such as a doctor inserts the endoscope 6A into the bronchus of the subject H in order to perform a biopsy of the lesion. In the biopsy, the fluoroscopic image capturing apparatus 3 captures a fluoroscopic image of the subject H and displays the captured fluoroscopic image in real time, and the user confirms a distal end position of the endoscope 6A in the subject H in the fluoroscopic image and moves the distal end of the endoscope 6A to a target position of the lesion.

Here, lung lesions such as pulmonary nodules occur outside the bronchus rather than inside the bronchus. Therefore, after moving the distal end of the endoscope 6A to the target position, the user performs treatment of collecting a part of the lesion using a treatment tool such as a forceps while confirming a position of the lesion in an ultrasound image obtained by imaging the outside of the bronchus with the ultrasound probe.

In the present embodiment, the three-dimensional medical image and the fluoroscopic image are different images, specifically, images captured by different modalities. In addition, the three-dimensional medical image and the fluoroscopic image are obtained by imaging an imaging range including a diagnosis target part of the same subject H. That is, at least a part of the imaging range of the three-dimensional medical image captured by the three-dimensional image capturing apparatus 2 and a part of the imaging range of the fluoroscopic image captured by the fluoroscopic image capturing apparatus 3 overlap with each other.

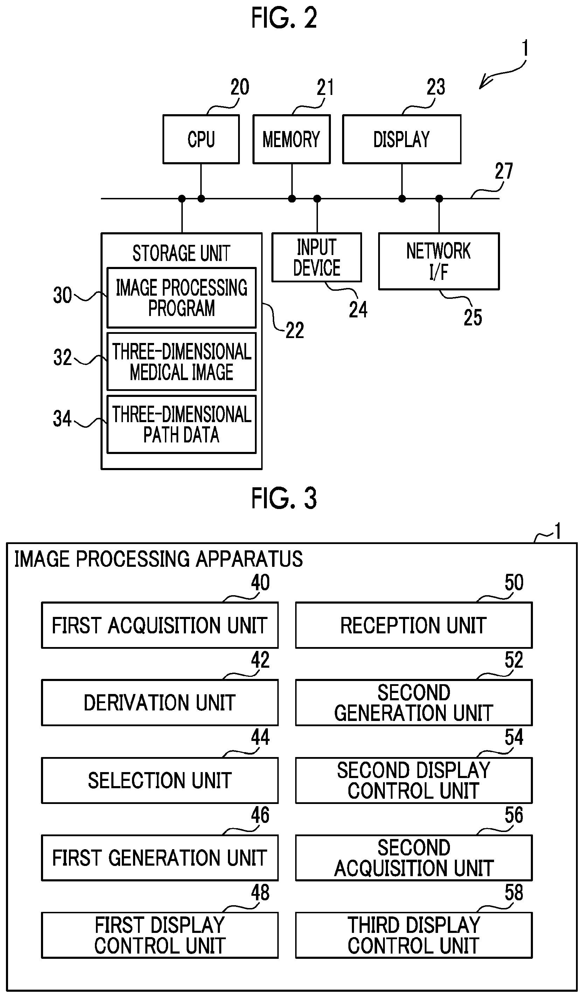

Next, a hardware configuration of the image processing apparatus 1 according to the present embodiment will be described with reference to Fig. 2. The image processing apparatus 1 is an apparatus that supports insertion of the endoscope 6A into a bronchus as an example of a tubular structure. As shown in Fig. 2, the image processing apparatus 1 includes a central processing unit (CPU) 20, a memory 21 as a temporary storage region, and a non-volatile storage unit 22. In addition, the image processing apparatus 1 includes a display 23 such as a liquid crystal display, an input device 24 such as a keyboard and a mouse, and a network interface (I/F) 25 that is connected to the network 5. The input device 24 may be a touch panel integrated with the display 23. The CPU 20, the memory 21, the storage unit 22, the display 23, the input device 24, and the network I/F 25 are connected to a bus 27. The CPU 20 is an example of a processor according to the disclosed technology. Examples of the image processing apparatus 1 include a computer, such as a personal computer or a server computer.

The storage unit 22 is realized by a hard disk drive (HDD), a solid state drive (SSD), a flash memory, or the like. An image processing program 30 is stored in the storage unit 22 as a storage medium. The CPU 20 reads out the image processing program 30 from the storage unit 22, expands the image processing program 30 in the memory 21, and executes the expanded image processing program 30.

In addition, a three-dimensional medical image 32 and three-dimensional path data 34 are stored in the storage unit 22. The three-dimensional medical image 32 includes a tomographic image group obtained by imaging the subject H to be subjected to the biopsy. The three-dimensional medical image 32 is acquired from the image storage server 4 via the network 5 before the biopsy.

The three-dimensional path data 34 is data generated based on the three-dimensional medical image 32. Specifically, the three-dimensional path data 34 is a set of voxel data generated by performing 3 dimension (3D) modeling that numerically describes a three-dimensional shape of the body of the subject H, based on the three-dimensional medical image 32. The voxel data is a unit of a pixel in the three-dimensional space, and has the three-dimensional coordinate information and the pixel value. In the present embodiment, the imaging range of the three-dimensional medical image 32 includes a bronchus. That is, the three-dimensional path data 34 includes a three-dimensional path that is three-dimensional information of a bronchial lumen that is a path through which the endoscope 6A passes. The three-dimensional path is a set of voxel data corresponding to the bronchial lumen. That is, the three-dimensional path is also a three-dimensional image.

Next, a functional configuration of the image processing apparatus 1 will be described with reference to Fig. 3. As shown in Fig. 3, the image processing apparatus 1 includes a first acquisition unit 40, a derivation unit 42, a selection unit 44, a first generation unit 46, a first display control unit 48, a reception unit 50, a second generation unit 52, a second display control unit 54, a second acquisition unit 56, and a third display control unit 58. The CPU 20 executes the image processing program 30 to function as the first acquisition unit 40, the derivation unit 42, the selection unit 44, the first generation unit 46, the first display control unit 48, the reception unit 50, the second generation unit 52, the second display control unit 54, the second acquisition unit 56, and the third display control unit 58.

The first acquisition unit 40 acquires the three-dimensional medical image 32 from the storage unit 22. In addition, the first acquisition unit 40 sequentially acquires the fluoroscopic images captured by the fluoroscopic image capturing apparatus 3 in accordance with a predetermined frame rate through the network I/F 25.

The derivation unit 42 derives a first transformation parameter for projecting the three-dimensional medical image 32 onto the image space of the fluoroscopic image by performing registration between the three-dimensional medical image 32 and the fluoroscopic image acquired by the first acquisition unit 40.

In the present embodiment, the derivation unit 42 derives a plurality of sets of the first transformation parameters by performing the registration between the three-dimensional medical image 32 and the fluoroscopic image using a plurality of different methods. Specifically, the derivation unit 42 derives the plurality of sets of first transformation parameters by sequentially performing three methods of registration by a rigid transformation, registration by an affine transformation, and registration by a non-linear non-rigid transformation. The affine transformation is an example of a linear non-rigid transformation. The derivation unit 42 may derive the plurality of sets of the first transformation parameters by individually performing a plurality of registration methods instead of sequentially performing the plurality of registration methods. The transformation parameter of the rigid transformation includes a plurality of parameters such as a rotation amount and a parallel movement amount. The transformation parameters of the affine transformation and the non-linear non-rigid transformation also include a plurality of parameters. In the affine transformation and the non-linear non-rigid transformation, the transformation parameter includes a parameter for transforming the image.

First, the derivation unit 42 projects the three-dimensional medical image 32 in the same direction as the imaging direction of the fluoroscopic image with respect to the 2-dimensional plane, and derives the parameters of the rigid transformation as the first transformation parameters such that the positions of known regions such as the bronchus, the pulmonary artery, and the lesion region match the positions of the regions in the fluoroscopic image.

Next, the derivation unit 42 projects the three-dimensional medical image 32 after transformation by the rigid transformation in the same manner as the rigid transformation, and derives the parameter of the affine transformation as the first transformation parameter such that the position of the known region matches the position of the region in the fluoroscopic image. Further, the derivation unit 42 projects the three-dimensional medical image 32 after transformation by the rigid transformation and the affine transformation in the same manner as the rigid transformation, and derives the parameter of the non-linear non-rigid transformation as the first transformation parameter such that the position of the known region matches the position of the region in the fluoroscopic image.

The derivation unit 42 may set each of a plurality of different sets of initial transformation parameters and search ranges. In this case, for each set of the initial transformation parameters and the search ranges, the derivation unit 42 may derive the first transformation parameter by repeatedly performing the registration between the three-dimensional medical image 32 and the fluoroscopic image while varying the transformation parameter within the search range based on the initial transformation parameter. In this case, the derivation unit 42 may use, as the first transformation parameter, the transformation parameter used to generate the two-dimensional image having the highest similarity with the fluoroscopic image among the two-dimensional images obtained by projecting the three-dimensional medical image 32 onto the 2-dimensional plane using the transformation parameter in each set.

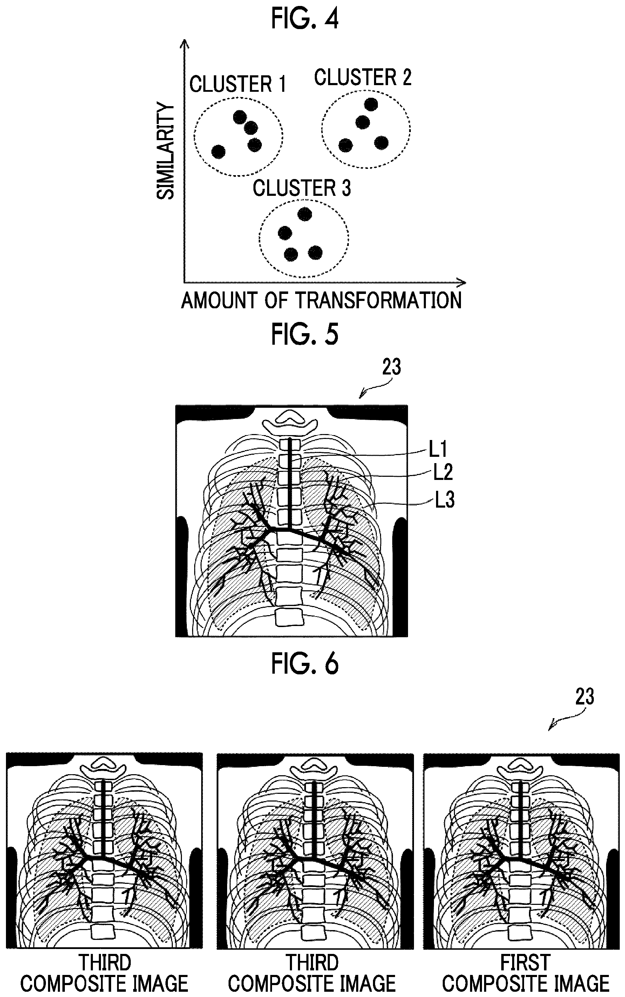

In addition, the derivation unit 42 may cluster all the transformation parameters in a case in which two or more transformation parameters are derived by performing the registration between the three-dimensional medical image 32 and the fluoroscopic image. Fig. 4 shows an example of a clustering result of the transformation parameter using two indicators of the amount of transformation by the transformation parameter and the similarity between the two-dimensional image obtained by using the transformation parameter and the fluoroscopic image. One circle mark in Fig. 4 represents one transformation parameter. Fig. 4 shows an example in which 12 transformation parameters are classified into three clusters. In this case, the derivation unit 42 may derive the transformation parameters representing each cluster as the plurality of sets of the first transformation parameters. The transformation parameters representing each cluster may be transformation parameters having the highest similarity or transformation parameters having the smallest amount of transformation.

The selection unit 44 selects one first transformation parameter from among the plurality of sets of first transformation parameters derived by the derivation unit 42. For example, the selection unit 44 selects a first transformation parameter with the highest similarity between the two-dimensional image obtained by projecting the three-dimensional medical image 32 onto the 2-dimensional plane using the first transformation parameter and the fluoroscopic image among the plurality of sets of the first transformation parameters. A known index value such as a total value of differences or cosine similarity between corresponding pixels can be applied to the similarity between images.

The first generation unit 46 generates a composite image (hereinafter, referred to as a "first composite image") in which the three-dimensional medical image 32 is superimposed on the fluoroscopic image using the one first transformation parameter selected by the selection unit 44. In the present embodiment, the first composite image in which one or more regions of interest included in the three-dimensional medical image 32 are superimposed on the fluoroscopic image using the first transformation parameter is generated. In the present embodiment, a case where a region of a main bronchial part of a bronchus, a region of a pulmonary artery, and a contour of a lung field are applied as the region of interest will be described as an example. A lesion region such as a region of a pulmonary nodule may be applied as the region of interest.

The first display control unit 48 performs a control of displaying the first composite image generated by the first generation unit 46 on the display 23. Fig. 5 shows an example of the display screen of the first composite image displayed on the display 23. Fig. 5 shows an example in which the main bronchial part of the bronchus, the pulmonary artery, and the contour of the lung field are superimposed on the fluoroscopic image. In Fig. 5, a solid line L1 indicates the main bronchial part of the bronchus, a solid line L2 indicates the pulmonary artery, and a broken line L3 indicates the contour of the lung field.

The first display control unit 48 may perform a control of displaying the region of interest in a display aspect in which the region of interest is identifiable in the first composite image. For example, the first display control unit 48 may perform the control of displaying the region of interest by filling the region of interest with a color other than the color used in the fluoroscopic image, such as performing a control of displaying the main bronchial part of the bronchus in green and displaying the pulmonary artery in red. As a result, the region of interest can be identified. In addition, the first display control unit 48 may perform the control of displaying the regions of interest in a display aspect in which the regions of interest are identifiable by making not only the color but also the type of line such as a broken line, the thickness of the line, the transparency of the line, or the like different for each region of interest.

The user checks the first composite image displayed on the display 23 and inputs information representing the validity of the first composite image. For example, the user inputs information representing whether or not the registration in the first composite image is valid via the input device 24. The reception unit 50 receives a user input representing the validity of the first composite image.

In a case where the user input received by the reception unit 50 represents that the first composite image is not valid, the second generation unit 52 extracts one or more transformation parameters other than the one transformation parameter used to generate the first composite image from among the plurality of sets of transformation parameters derived by the derivation unit 42. For example, in a case where the one transformation parameter used for generating the first composite image is the parameter of the affine transformation, the second generation unit 52 extracts the parameter of the rigid transformation and the parameter of the non-linear non-rigid transformation as the transformation parameters.

The second generation unit 52 generates a composite image in which the three-dimensional medical image 32 is superimposed on the fluoroscopic image using the one or more extracted transformation parameters, similarly to the first generation unit 46. The composite image generated by the second generation unit 52 is referred to as a "third composite image" in order to distinguish the composite image from the first composite image described above and the second composite image described below. In a case where the second generation unit 52 extracts two or more sets of the transformation parameters, the second generation unit 52 generates a plurality of the third composite images by separately using each of the transformation parameters.

The second display control unit 54 performs a control of displaying the third composite image generated by the second generation unit 52 on the display 23. Fig. 6 shows an example of the display screen of the third composite image displayed on the display 23. As shown in Fig. 6, in the present embodiment, the second display control unit 54 performs a control of displaying the first composite image on the display 23 together with the third composite image in order to compare the third composite image with the first composite image. Fig. 6 shows an example of a case where there are two third composite images.

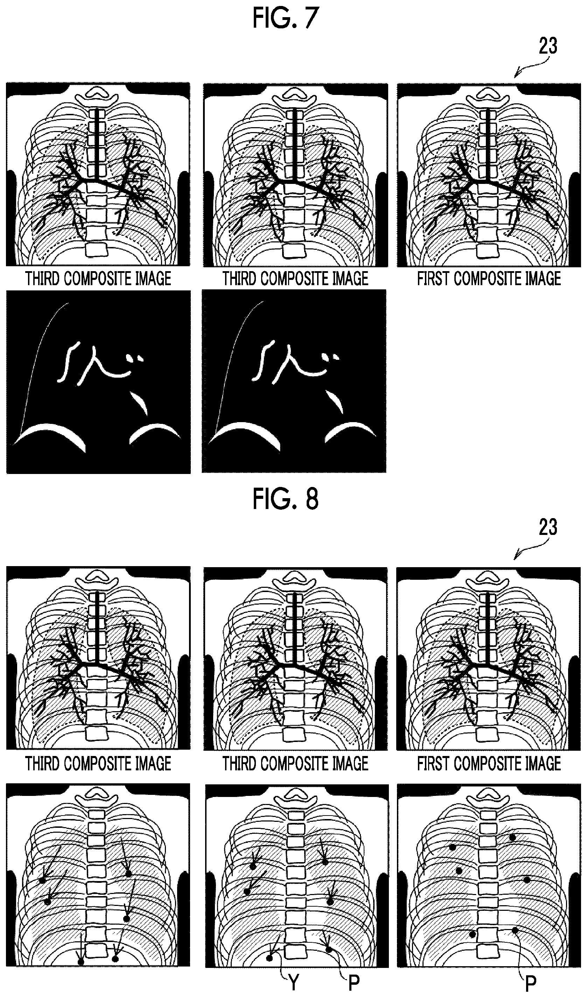

In the control of displaying the third composite image, the second display control unit 54 may perform a control of displaying information representing a difference between the first composite image and the third composite image. In this case, as shown in Fig. 7, the second display control unit 54 may perform a control of displaying a difference between the first composite image and the third composite image in pixel units as the information representing the difference. Fig. 7 shows an example in which difference images between the first composite image and the third composite image are displayed below each of the third composite images.

In addition, as shown in Fig. 8, the second display control unit 54 may display information representing a difference between a landmark P superimposed on the first composite image using the first transformation parameter and the landmark P superimposed on the third composite image using one or more transformation parameters as the information representing the difference. In this case, the landmark P may be set in advance on the three-dimensional medical image 32, and the second display control unit 54 may acquire the landmark P set on the three-dimensional medical image 32. In the example of Fig. 8, six landmarks P are superimposed on the first composite image and the third composite image, and in the third composite image, a difference in position of each landmark P is represented by an arrow Y. In addition, in the example of Fig. 8, the start point of the arrow represents the position of the landmark P in the first composite image, and the end point of the arrow represents the position of the landmark P in the third image. That is, the user can ascertain in which direction and by how much the landmark P deviates by viewing the arrow. Examples of the landmark P include a bifurcation of a bronchus and an anterior bronchus.

The user checks the third composite image displayed on the display 23 and selects the third composite image that is considered to be most valid via the input device 24. The second acquisition unit 56 acquires the transformation parameter used to generate the third composite image selected by the user as the second transformation parameter. That is, the second acquisition unit 56 acquires the second transformation parameter different from the first transformation parameter from among the plurality of sets of the first transformation parameters.

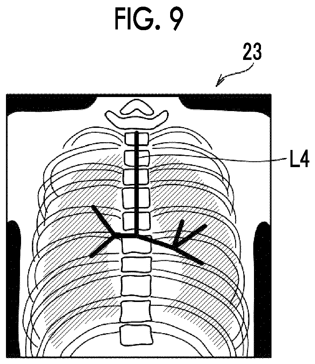

The third display control unit 58 performs a control of displaying a composite image (hereinafter, referred to as a "second composite image") in which a plurality of images are composed by using the second transformation parameter acquired by the second acquisition unit 56 on the display 23. In the present embodiment, the third display control unit 58 performs a control of displaying the second composite image in which the three-dimensional path included in the three-dimensional path data 34 is superimposed on the fluoroscopic image using the second transformation parameter on the display 23. Fig. 9 shows an example of a display screen of the second composite image. A solid line L4 in Fig. 9 represents a three-dimensional path which is a path through which the endoscope 6A passes. This display screen is used as a screen for navigating the operation of the endoscope 6A by the user.

In addition, in a case where the user input received by the reception unit 50 represents that the first composite image is valid, the third display control unit 58 performs the control of displaying, on the display 23, the second composite image in which the three-dimensional path included in the three-dimensional path data 34 is superimposed on the fluoroscopic image using the first transformation parameter.

In a case where the user selects the first composite image on the display screen of the third composite image, the third display control unit 58 may perform the control of displaying the second composite image in which the three-dimensional path is superimposed on the fluoroscopic image using the first transformation parameter on the display 23.

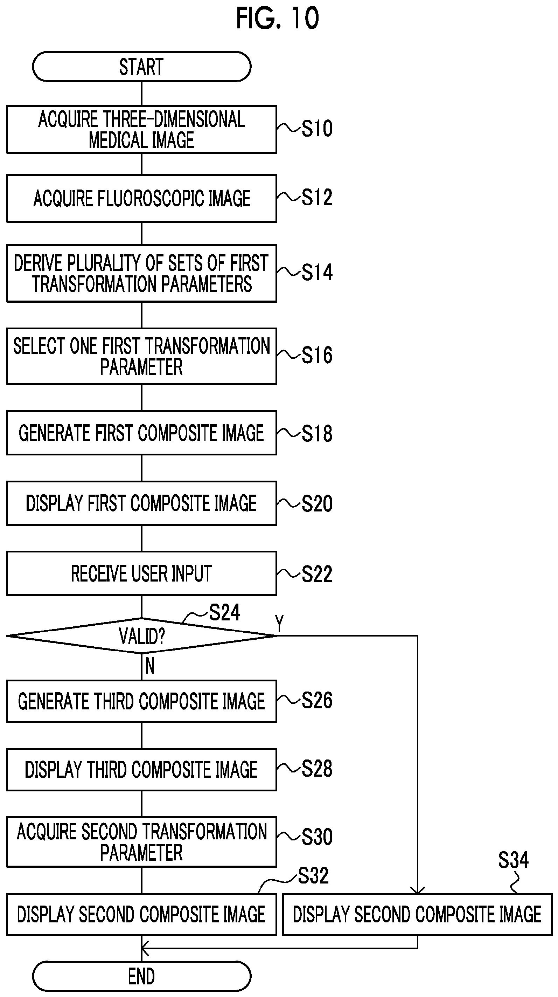

Next, an operation of the image processing apparatus 1 will be described with reference to Fig. 10. The CPU 20 executes the image processing program 30 to execute insertion support processing shown in Fig. 10. The insertion support processing is executed, for example, in a case in which an instruction to start an execution is input by the user.

In step S10 in Fig. 10, the first acquisition unit 40 acquires the three-dimensional medical image 32 from the storage unit 22. In step S12, the first acquisition unit 40 acquires the fluoroscopic images captured by the fluoroscopic image capturing apparatus 3 through the network I/F 25. In step S14, as described above, the derivation unit 42 derives the plurality of sets of the first transformation parameters by performing the registration between the three-dimensional medical image 32 and the fluoroscopic image using the plurality of different methods.

In step S16, as described above, the selection unit 44 selects one first transformation parameter from among the plurality of sets of first transformation parameters derived in step S14. In step S18, as described above, the first generation unit 46 generates the first composite image in which the three-dimensional medical image 32 is superimposed on the fluoroscopic image using the one first transformation parameter selected in step S16. In step S20, the first display control unit 48 performs the control of displaying the first composite image generated in step S18 on the display 23.

In step S22, the reception unit 50 receives the user input representing the validity of the first composite image displayed on the display 23 in step S20. In step S24, the second generation unit 52 determines whether or not the user input received in step S22 represents that the first composite image is valid. In a case where the determination is a negative determination, that is, in a case where the user input represents that the first composite image is not valid, the processing proceeds to step S26.

In step S26, as described above, the second generation unit 52 extracts one or more transformation parameters other than the one transformation parameter used for generating the first composite image from among the plurality of sets of transformation parameters derived in step S14. The second generation unit 52 generates the third composite image in which the three-dimensional medical image 32 is superimposed on the fluoroscopic image using the one or more extracted transformation parameters.

In step S28, the second display control unit 54 performs the control of displaying the third composite image generated in step S26 on the display 23. In step S30, the second acquisition unit 56 acquires the transformation parameter used to generate the third composite image selected by the user as the second transformation parameter. In step S32, the third display control unit 58 performs the control of displaying the second composite image in which the three-dimensional path included in the three-dimensional path data 34 is superimposed on the fluoroscopic image using the second transformation parameter acquired in step S30 on the display 23. In a case in which the processing of step S32 ends, the insertion support processing ends.

Meanwhile, in a case where the determination in step S24 is an affirmative determination, the processing proceeds to step S34. In step S34, the third display control unit 58 performs the control of displaying the second composite image in which the three-dimensional path is superimposed on the fluoroscopic image using the first transformation parameter on the display 23. In a case in which the processing of step S34 ends, the insertion support processing ends.

As described above, according to the present embodiment, it is possible to suppress a decrease in accuracy of registration between images while suppressing an increase in a burden on a user.

In the above-described embodiment, the case where the endoscope is applied as the medical appliance and the bronchial lumen is applied as the path through which the medical appliance passes has been described, but the disclosed technology is not limited to this aspect. For example, a blood vessel lumen may be applied as the path through which the medical appliance passes.

In addition, in the above embodiment, a case in which a fluoroscopic image is applied as the two-dimensional medical image has been described, but the disclosed technology is not limited to this aspect. For example, an endoscope image may be applied as the two-dimensional medical image.

Further, in the embodiment, for example, as a hardware structure of a processing unit that executes various processing, such as each functional unit of the image processing apparatus 1, the following various processors may be used. The various processors include, in addition to a CPU that is a general-purpose processor functioning as various processing units by executing software (program) as described above, a programmable logic device (PLD) such as a field programmable gate array (FPGA) that is a processor having a circuit configuration changeable after manufacture, a dedicated electric circuit such as an application specific integrated circuit (ASIC) that is a processor having a circuit configuration dedicatedly designed to execute specific processing, and the like.

One processing unit may be composed of one of the various processors or may be composed of a combination of two or more processors of the same type or different types (for example, a combination of a plurality of FPGAs or a combination of a CPU and an FPGA). In addition, a plurality of the processing units may be configured by one processor.

As an example of the plurality of processing units composed of one processor, first, the present disclosure includes an aspect in which one processor is composed of a combination of one or more CPUs and software, and the processor functions as the plurality of processing units, as represented by a computer such as a client and a server. Second, as represented by a system on a chip (SoC), a form of using a processor that implements functions of the entire system including the plurality of processing units in one integrated circuit (IC) chip is possible. In this way, as the hardware structure, the various processing units are configured by using one or more of the various processors described above.

More specifically, an electric circuit (circuitry) in which circuit elements such as semiconductor elements are combined can be used as the hardware structure of the various processors.

In the embodiment, an aspect has been described in which the image processing program 30 is stored (installed) in the storage unit 22 in advance, but the present disclosure is not limited to this. The image processing program 30 may be provided in an aspect in which the image processing program 30 is recorded in a recording medium, such as a compact disc read only memory (CD-ROM), a digital versatile disc read only memory (DVD-ROM), and a universal serial bus (USB) memory. In addition, the image processing program 30 may be downloaded from an external device via a network.

### Explanation of References

1: image processing apparatus
2: three-dimensional image capturing apparatus
3: fluoroscopic image capturing apparatus
3A: C-arm
3B: X-ray source
3C: X-ray detector
4: image storage server
5: network
6: ultrasonic endoscope apparatus
6A: endoscope
10: medical information system
20: CPU
21: memory
22: storage unit
23: display
24: input device
25: network I/F
27: bus
30: image processing program
32: three-dimensional medical image
34: three-dimensional path data
40: first acquisition unit
42: derivation unit
44: selection unit
46: first generation unit
48: first display control unit
50: reception unit
52: second generation unit
54: second display control unit
56: second acquisition unit
58: third display control unit
H: subject
L1, L2, L4: solid line
L3: broken line
P: landmark
Y: arrow

## Claims

1. An image processing apparatus comprising at least one processor,
wherein the processor is configured to:
acquire a first image, and a second image different from the first image and having an imaging range of which at least a part overlaps with an imaging range of the first image;
derive a first transformation parameter for projecting the first image onto an image space of the second image by performing registration between the first image and the second image;
perform a control of displaying a first composite image in which the first image is superimposed on the second image using the first transformation parameter;
receive a user input representing validity of the first composite image;
acquire a second transformation parameter different from the first transformation parameter in a case where the user input represents that the first composite image is not valid; and
perform a control of displaying a second composite image obtained by composing a plurality of images using one or more of the first transformation parameter and the second transformation parameter, wherein
the processor is configured to:
generate the first composite image in which one or more regions of interest included in the first image are superimposed on the second image using the first transformation parameter;
perform a control of displaying the region of interest in the first composite image in a display aspect in which the region of interest is identifiable;
derive a plurality of sets of the first transformation parameters by performing the registration between the first image and the second image;
select one first transformation parameter from among the derived plurality of sets of the first transformation parameters;
perform the control of displaying the first composite image in which the first image is superimposed on the second image using the selected one first transformation parameter; and
acquire the second transformation parameter different from the first transformation parameter from among the plurality of sets of the first transformation parameters in a case where the user input represents that the first composite image is not valid;
wherein the processor is further configured to:
perform a control of displaying a third composite image in which the first image is superimposed on the second image using one or more transformation parameters other than the first transformation parameter used to generate the first composite image from among the plurality of sets of the first transformation parameters in a case where the user input represents that the first composite image is not valid; and
acquire the transformation parameter used to generate the third composite image selected by a user as the second transformation parameter, and
to perform, in the control of displaying the third composite image, a control of displaying information representing a difference between the first composite image and the third composite image.

2. The image processing apparatus according to claim 1,
wherein the information representing the difference is a difference between the first composite image and the third composite image in pixel units.

3. The image processing apparatus according to claim 1,
wherein the processor is configured to:
acquire a landmark set on the first image; and
perform a control of displaying information representing a difference between the landmark superimposed on the first composite image using the first transformation parameter and the landmark superimposed on the third composite image using the one or more transformation parameters as the information representing the difference.

4. The image processing apparatus according to claim 1,
wherein the processor is configured to:
cluster all the first transformation parameters derived by performing the registration between the first image and the second image; and
derive transformation parameters representing each cluster as the plurality of sets of the first transformation parameters.

5. The image processing apparatus according to claim 1,
wherein the processor is configured to derive the plurality of sets of the first transformation parameters by performing the registration between the first image and the second image using a plurality of different methods.

6. The image processing apparatus according to claim 1,
wherein the processor is configured to set each of a plurality of different sets of initial transformation parameters and search ranges and derive the plurality of sets of the first transformation parameters by repeatedly performing the registration between the first image and the second image.

7. The image processing apparatus according to any one of claims 1 to 6,
wherein the first image is a three-dimensional medical image captured before a surgery.

8. The image processing apparatus according to any one of claims 1 to 7,
wherein the second image is a two-dimensional medical image captured during a surgery.

9. The image processing apparatus according to claim 1,
wherein the region of interest is a region of a main bronchial part of a bronchus, a region of a pulmonary artery, a contour of a lung field, or a region of a pulmonary nodule.

10. An image processing method for executing a process by a processor included in an image processing apparatus, the process comprising:
acquiring a first image, and a second image different from the first image and having an imaging range of which at least a part overlaps with an imaging range of the first image;
deriving a first transformation parameter for projecting the first image onto an image space of the second image by performing registration between the first image and the second image;
performing a control of displaying a first composite image in which the first image is superimposed on the second image using the first transformation parameter;
receiving a user input representing validity of the first composite image;
acquiring a second transformation parameter different from the first transformation parameter in a case where the user input represents that the first composite image is not valid; and
performing a control of displaying a second composite image obtained by composing a plurality of images using one or more of the first transformation parameter and the second transformation parameter, wherein the processor is configured to:
generate the first composite image in which one or more regions of interest included in the first image are superimposed on the second image using the first transformation parameter;
perform a control of displaying the region of interest in the first composite image in a display aspect in which the region of interest is identifiable;
derive a plurality of sets of the first transformation parameters by performing the registration between the first image and the second image;
select one first transformation parameter from among the derived plurality of sets of the first transformation parameters;
perform the control of displaying the first composite image in which the first image is superimposed on the second image using the selected one first transformation parameter; and
acquire the second transformation parameter different from the first transformation parameter from among the plurality of sets of the first transformation parameters in a case where the user input represents that the first composite image is not valid;
wherein the processor is further configured to:
perform a control of displaying a third composite image in which the first image is superimposed on the second image using one or more transformation parameters other than the first transformation parameter used to generate the first composite image from among the plurality of sets of the first transformation parameters in a case where the user input represents that the first composite image is not valid; and
acquire the transformation parameter used to generate the third composite image selected by a user as the second transformation parameter, and
to perform, in the control of displaying the third composite image, a control of displaying information representing a difference between the first composite image and the third composite image.

11. A computer-readable storage medium storing an image processing program for causing a processor included in an image processing apparatus to execute a process comprising:
acquiring a first image, and a second image different from the first image and having an imaging range of which at least a part overlaps with an imaging range of the first image;
deriving a first transformation parameter for projecting the first image onto an image space of the second image by performing registration between the first image and the second image;
performing a control of displaying a first composite image in which the first image is superimposed on the second image using the first transformation parameter;
receiving a user input representing validity of the first composite image;
acquiring a second transformation parameter different from the first transformation parameter in a case where the user input represents that the first composite image is not valid; and
performing a control of displaying a second composite image obtained by composing a plurality of images using one or more of the first transformation parameter and the second transformation parameter, wherein the processor is configured to:
generate the first composite image in which one or more regions of interest included in the first image are superimposed on the second image using the first transformation parameter;
perform a control of displaying the region of interest in the first composite image in a display aspect in which the region of interest is identifiable;
derive a plurality of sets of the first transformation parameters by performing the registration between the first image and the second image;
select one first transformation parameter from among the derived plurality of sets of the first transformation parameters;
perform the control of displaying the first composite image in which the first image is superimposed on the second image using the selected one first transformation parameter; and
acquire the second transformation parameter different from the first transformation parameter from among the plurality of sets of the first transformation parameters in a case where the user input represents that the first composite image is not valid;
wherein the processor is further configured to:
perform a control of displaying a third composite image in which the first image is superimposed on the second image using one or more transformation parameters other than the first transformation parameter used to generate the first composite image from among the plurality of sets of the first transformation parameters in a case where the user input represents that the first composite image is not valid; and
acquire the transformation parameter used to generate the third composite image selected by a user as the second transformation parameter, and
to perform, in the control of displaying the third composite image, a control of displaying information representing a difference between the first composite image and the third composite image.

## Patentansprüche

1. Bildverarbeitungsvorrichtung, die mindestens einen Prozessor umfasst,
wobei der Prozessor so konfiguriert ist, dass er:
ein erstes Bild und ein zweites Bild, das sich von dem ersten Bild unterscheidet und einen Bildgebungsbereich aufweist, von dem sich mindestens ein Teil mit einem Bildgebungsbereich des ersten Bildes überlappt, erfasst;
einen ersten Transformationsparameter zum Projizieren des ersten Bildes auf einen Bildraum des zweiten Bildes durch Durchführen von Registrierung zwischen dem ersten Bild und dem zweiten Bild ableitet;
eine Steuerung des Anzeigens eines ersten zusammengesetzten Bildes, in dem das erste Bild dem zweiten Bild überlagert ist, unter Verwendung des ersten Transformationsparameters durchführt;
eine Benutzereingabe, die Gültigkeit des ersten zusammengesetzten Bildes darstellt, empfängt;
einen zweiten Transformationsparameter, der sich von dem ersten Transformationsparameter unterscheidet, in einem Fall, in dem die Benutzereingabe darstellt, dass das erste zusammengesetzte Bild nicht gültig ist, erfasst; und
eine Steuerung des Anzeigens eines zweiten zusammengesetzten Bildes, das durch Zusammensetzen mehrerer Bilder unter Verwendung von einem oder mehreren von dem ersten Transformationsparameter und dem zweiten Transformationsparameter erhalten wird, durchführt, wobei
der Prozessor so konfiguriert ist, dass er:
das erste zusammengesetzte Bild, in dem ein oder mehrere Bereiche von Interesse, die in dem ersten Bild enthalten sind, dem zweiten Bild überlagert sind, unter Verwendung des ersten Transformationsparameters erzeugt;
eine Steuerung des Anzeigens des Bereichs von Interesse in dem ersten zusammengesetzten Bild in einer Anzeigeansicht, in der der Bereich von Interesse identifizierbar ist, durchführt;
mehrere Sätze der ersten Transformationsparameter durch Durchführen der Registrierung zwischen dem ersten Bild und dem zweiten Bild ableitet;
einen ersten Transformationsparameter aus den abgeleiteten mehreren Sätzen der ersten Transformationsparameter auswählt;
die Steuerung des Anzeigens des ersten zusammengesetzten Bildes, in dem das erste Bild dem zweiten Bild überlagert ist, unter Verwendung des ausgewählten einen ersten Transformationsparameters durchführt; und
den zweiten Transformationsparameter, der sich von dem ersten Transformationsparameter unterscheidet, aus den mehreren Sätzen der ersten Transformationsparameter in einem Fall, in dem die Benutzereingabe darstellt, dass das erste zusammengesetzte Bild nicht gültig ist, erfasst;
wobei der Prozessor ferner so konfiguriert ist, dass er:
eine Steuerung des Anzeigens eines dritten zusammengesetzten Bildes, in dem das erste Bild dem zweiten Bild überlagert ist, unter Verwendung eines oder mehrerer Transformationsparameter, die nicht der erste Transformationsparameter sind, der zum Erzeugen des ersten zusammengesetzten Bildes verwendet worden ist, aus den mehreren Sätzen der ersten Transformationsparameter in einem Fall, in dem die Benutzereingabe darstellt, dass das erste zusammengesetzte Bild nicht gültig ist, durchführt; und
den Transformationsparameter, der zum Erzeugen des von einem Benutzer ausgewählten dritten zusammengesetzten Bildes verwendet worden ist, als den zweiten Transformationsparameter erfasst, und
bei der Steuerung des Anzeigens des dritten zusammengesetzten Bildes eine Steuerung des Anzeigens von Informationen, die einen Unterschied zwischen dem ersten zusammengesetzten Bild und dem dritten zusammengesetzten Bild darstellen, durchführt.

2. Bildverarbeitungsvorrichtung nach Anspruch 1,
wobei die Informationen, die den Unterschied darstellen, ein Unterschied zwischen dem ersten zusammengesetzten Bild und dem dritten zusammengesetzten Bild in Pixeleinheiten sind.

3. Bildverarbeitungsvorrichtung nach Anspruch 1,
wobei der Prozessor so konfiguriert ist, dass er:
einen auf dem ersten Bild gesetzten Orientierungspunkt erfasst; und
eine Steuerung des Anzeigens von Informationen, die einen Unterschied zwischen dem dem ersten zusammengesetzten Bild unter Verwendung des ersten Transformationsparameters überlagerten Orientierungspunkt und dem dem dritten zusammengesetzten Bild unter Verwendung des einen oder der mehreren Transformationsparameter überlagerten Orientierungspunkt darstellen, als die Informationen, die den Unterschied darstellen, durchführt.

4. Bildverarbeitungsvorrichtung nach Anspruch 1,
wobei der Prozessor so konfiguriert ist, dass er:
alle von den ersten Transformationsparametern, die durch Durchführen der Registrierung zwischen dem ersten Bild und dem zweiten Bild abgeleitet worden sind, zu Clustern zusammenfasst; und
Transformationsparameter, die jedes Cluster darstellen, als die mehreren Sätze der ersten Transformationsparameter ableitet.

5. Bildverarbeitungsvorrichtung nach Anspruch 1,
wobei der Prozessor so konfiguriert ist, dass er die mehreren Sätze der ersten Transformationsparameter durch Durchführen der Registrierung zwischen dem ersten Bild und dem zweiten Bild unter Verwendung von mehreren unterschiedlichen Verfahren ableitet.

6. Bildverarbeitungsvorrichtung nach Anspruch 1,
wobei der Prozessor so konfiguriert ist, dass er jeden von mehreren unterschiedlichen Sätzen von anfänglichen Transformationsparametern und Suchbereichen einstellt und die mehreren Sätze der ersten Transformationsparameter durch wiederholtes Durchführen der Registrierung zwischen dem ersten Bild und dem zweiten Bild ableitet.

7. Bildverarbeitungsvorrichtung nach einem der Ansprüche 1 bis 6,
wobei das erste Bild ein dreidimensionales medizinisches Bild ist, das vor einer Operation aufgenommen worden ist.

8. Bildverarbeitungsvorrichtung nach einem der Ansprüche 1 bis 7,
wobei das zweite Bild ein zweidimensionales medizinisches Bild ist, das während einer Operation aufgenommen worden ist.

9. Bildverarbeitungsvorrichtung nach Anspruch 1,
wobei der Bereich von Interesse ein Bereich eines Hauptbronchialteils einer Bronchie, ein Bereich einer Lungenarterie, eine Kontur eines Lungenfelds oder ein Bereich eines Lungenknötchens ist.

10. Bildverarbeitungsverfahren zum Ausführen eines Prozesses durch einen Prozessor, der in einer Bildverarbeitungsvorrichtung enthalten ist, wobei der Prozess umfasst:
Erfassen eines ersten Bildes und eines zweiten Bildes, das sich von dem ersten Bild unterscheidet und einen Bildgebungsbereich aufweist, von dem sich mindestens ein Teil mit einem Bildgebungsbereich des ersten Bildes überlappt;
Ableiten eines ersten Transformationsparameters zum Projizieren des ersten Bildes auf einen Bildraum des zweiten Bildes durch Durchführen von Registrierung zwischen dem ersten Bild und dem zweiten Bild;
Durchführen einer Steuerung des Anzeigens eines ersten zusammengesetzten Bildes, in dem das erste Bild dem zweiten Bild überlagert ist, unter Verwendung des ersten Transformationsparameters;
Empfangen einer Benutzereingabe, die Gültigkeit des ersten zusammengesetzten Bildes darstellt;
Erfassen eines zweiten Transformationsparameters, der sich von dem ersten Transformationsparameter unterscheidet, in einem Fall, in dem die Benutzereingabe darstellt, dass das erste zusammengesetzte Bild nicht gültig ist; und
Durchführen einer Steuerung des Anzeigens eines zweiten zusammengesetzten Bildes, das durch Zusammensetzen mehrerer Bilder unter Verwendung von einem oder mehreren von dem ersten Transformationsparameter und dem zweiten Transformationsparameter erhalten wird, wobei der Prozessor so konfiguriert ist, dass er:
das erste zusammengesetzte Bild, in dem ein oder mehrere Bereiche von Interesse, die in dem ersten Bild enthalten sind, dem zweiten Bild überlagert sind, unter Verwendung des ersten Transformationsparameters erzeugt;
eine Steuerung des Anzeigens des Bereichs von Interesse in dem ersten zusammengesetzten Bild in einer Anzeigeansicht, in der der Bereich von Interesse identifizierbar ist, durchführt;
mehrere Sätze der ersten Transformationsparameter durch Durchführen der Registrierung zwischen dem ersten Bild und dem zweiten Bild ableitet;
einen ersten Transformationsparameter aus den abgeleiteten mehreren Sätzen der ersten Transformationsparameter auswählt;
die Steuerung des Anzeigens des ersten zusammengesetzten Bildes, in dem das erste Bild dem zweiten Bild überlagert ist, unter Verwendung des ausgewählten einen ersten Transformationsparameters durchführt; und
den zweiten Transformationsparameter, der sich von dem ersten Transformationsparameter unterscheidet, aus den mehreren Sätzen der ersten Transformationsparameter in einem Fall, in dem die Benutzereingabe darstellt, dass das erste zusammengesetzte Bild nicht gültig ist, erfasst;
wobei der Prozessor ferner so konfiguriert ist, dass er:
eine Steuerung des Anzeigens eines dritten zusammengesetzten Bildes, in dem das erste Bild dem zweiten Bild überlagert ist, unter Verwendung eines oder mehrerer Transformationsparameter, die nicht der erste Transformationsparameter sind, der zum Erzeugen des ersten zusammengesetzten Bildes verwendet worden ist, aus den mehreren Sätzen der ersten Transformationsparameter in einem Fall, in dem die Benutzereingabe darstellt, dass das erste zusammengesetzte Bild nicht gültig ist, durchführt; und
den Transformationsparameter, der zum Erzeugen des von einem Benutzer ausgewählten dritten zusammengesetzten Bildes verwendet worden ist, als den zweiten Transformationsparameter erfasst, und
bei der Steuerung des Anzeigens des dritten zusammengesetzten Bildes eine Steuerung des Anzeigens von Informationen, die einen Unterschied zwischen dem ersten zusammengesetzten Bild und dem dritten zusammengesetzten Bild darstellen, durchführt.

11. Computerlesbares Speichermedium, das ein Bildverarbeitungsprogramm zum Veranlassen eines Prozessors, der in einer Bildverarbeitungsvorrichtung enthalten ist, speichert, einen Prozess auszuführen, der umfasst:
Erfassen eines ersten Bildes und eines zweiten Bildes, das sich von dem ersten Bild unterscheidet und einen Bildgebungsbereich aufweist, von dem sich mindestens ein Teil mit einem Bildgebungsbereich des ersten Bildes überlappt;
Ableiten eines ersten Transformationsparameters zum Projizieren des ersten Bildes auf einen Bildraum des zweiten Bildes durch Durchführen von Registrierung zwischen dem ersten Bild und dem zweiten Bild;
Durchführen einer Steuerung des Anzeigens eines ersten zusammengesetzten Bildes, in dem das erste Bild dem zweiten Bild überlagert ist, unter Verwendung des ersten Transformationsparameters;
Empfangen einer Benutzereingabe, die Gültigkeit des ersten zusammengesetzten Bildes darstellt;
Erfassen eines zweiten Transformationsparameters, der sich von dem ersten Transformationsparameter unterscheidet, in einem Fall, in dem die Benutzereingabe darstellt, dass das erste zusammengesetzte Bild nicht gültig ist; und
Durchführen einer Steuerung des Anzeigens eines zweiten zusammengesetzten Bildes, das durch Zusammensetzen mehrerer Bilder unter Verwendung von einem oder mehreren von dem ersten Transformationsparameter und dem zweiten Transformationsparameter erhalten wird, wobei der Prozessor so konfiguriert ist, dass er:
das erste zusammengesetzte Bild, in dem ein oder mehrere Bereiche von Interesse, die in dem ersten Bild enthalten sind, dem zweiten Bild überlagert sind, unter Verwendung des ersten Transformationsparameters erzeugt;
eine Steuerung des Anzeigens des Bereichs von Interesse in dem ersten zusammengesetzten Bild in einer Anzeigeansicht, in der der Bereich von Interesse identifizierbar ist, durchführt;
mehrere Sätze der ersten Transformationsparameter durch Durchführen der Registrierung zwischen dem ersten Bild und dem zweiten Bild ableitet;
einen ersten Transformationsparameter aus den abgeleiteten mehreren Sätzen der ersten Transformationsparameter auswählt;
die Steuerung des Anzeigens des ersten zusammengesetzten Bildes, in dem das erste Bild dem zweiten Bild überlagert ist, unter Verwendung des ausgewählten einen ersten Transformationsparameters durchführt; und
den zweiten Transformationsparameter, der sich von dem ersten Transformationsparameter unterscheidet, aus den mehreren Sätzen der ersten Transformationsparameter in einem Fall, in dem die Benutzereingabe darstellt, dass das erste zusammengesetzte Bild nicht gültig ist, erfasst;
wobei der Prozessor ferner so konfiguriert ist, dass er:
eine Steuerung des Anzeigens eines dritten zusammengesetzten Bildes, in dem das erste Bild dem zweiten Bild überlagert ist, unter Verwendung eines oder mehrerer Transformationsparameter, die nicht der erste Transformationsparameter sind, der zum Erzeugen des ersten zusammengesetzten Bildes verwendet worden ist, aus den mehreren Sätzen der ersten Transformationsparameter in einem Fall, in dem die Benutzereingabe darstellt, dass das erste zusammengesetzte Bild nicht gültig ist, durchführt; und
den Transformationsparameter, der zum Erzeugen des von einem Benutzer ausgewählten dritten zusammengesetzten Bildes verwendet worden ist, als den zweiten Transformationsparameter erfasst, und
bei der Steuerung des Anzeigens des dritten zusammengesetzten Bildes eine Steuerung des Anzeigens von Informationen, die einen Unterschied zwischen dem ersten zusammengesetzten Bild und dem dritten zusammengesetzten Bild darstellen, durchführt.

## Revendications

1. Appareil de traitement d'images comprenant au moins un processeur,
dans lequel le processeur est configuré pour :
acquérir une première image et une deuxième image différente de la première image et ayant une plage d'imagerie dont au moins une partie chevauche une plage d'imagerie de la première image ;
dériver un premier paramètre de transformation pour projeter la première image sur un espace d'image de la deuxième image en effectuant un recalage entre la première image et la deuxième image ;
effectuer un contrôle consistant à afficher une première image composite dans laquelle la première image est superposée sur la deuxième image en utilisant le premier paramètre de transformation ;
recevoir une entrée utilisateur représentant la validité de la première image composite ;
acquérir un deuxième paramètre de transformation différent du premier paramètre de transformation dans un cas où l'entrée utilisateur représente que la première image composite n'est pas valide ; et
effectuer un contrôle consistant à afficher une deuxième image composite obtenue en composant une pluralité d'images en utilisant un ou plusieurs parmi le premier paramètre de transformation et le deuxième paramètre de transformation, dans lequel le processeur est configuré pour :
générer la première image composite dans laquelle une ou plusieurs régions d'intérêt incluses dans la première image sont superposées sur la deuxième image en utilisant le premier paramètre de transformation ;
effectuer un contrôle consistant à afficher la région d'intérêt dans la première image composite dans un aspect d'affichage dans lequel la région d'intérêt est identifiable ;
dériver une pluralité d'ensembles des premiers paramètres de transformation en effectuant le recalage entre la première image et la deuxième image ;
sélectionner un premier paramètre de transformation parmi la pluralité d'ensembles dérivés des premiers paramètres de transformation ;
effectuer le contrôle consistant à afficher la première image composite dans laquelle la première image est superposée sur la deuxième image en utilisant le premier paramètre de transformation sélectionné ; et
acquérir le deuxième paramètre de transformation différent du premier paramètre de transformation parmi la pluralité d'ensembles des premiers paramètres de transformation dans un cas où l'entrée utilisateur représente que la première image composite n'est pas valide ;
dans lequel le processeur est en outre configuré pour :
effectuer un contrôle consistant à afficher une troisième image composite dans laquelle la première image est superposée sur la deuxième image en utilisant un ou plusieurs paramètres de transformation autres que le premier paramètre de transformation utilisé pour générer la première image composite parmi la pluralité d'ensembles des premiers paramètres de transformation dans un cas où l'entrée utilisateur représente que la première image composite n'est pas valide ; et
acquérir le paramètre de transformation utilisé pour générer la troisième image composite sélectionnée par un utilisateur comme deuxième paramètre de transformation, et
effectuer, dans le contrôle consistant à afficher la troisième image composite, un contrôle consistant à afficher des informations représentant une différence entre la première image composite et la troisième image composite.

2. Appareil de traitement d'images selon la revendication 1,
dans lequel les informations représentant la différence sont une différence entre la première image composite et la troisième image composite en unités de pixels.

3. Appareil de traitement d'images selon la revendication 1,
dans lequel le processeur est configuré pour :
acquérir un ensemble de repères sur la première image ; et
effectuer un contrôle consistant à afficher des informations représentant une différence entre le repère superposé sur la première image composite en utilisant le premier paramètre de transformation et le repère superposé sur la troisième image composite en utilisant l'un ou plusieurs paramètres de transformation comme informations représentant la différence.

4. Appareil de traitement d'images selon la revendication 1,
dans lequel le processeur est configuré pour :
regrouper tous les premiers paramètres de transformation dérivés en effectuant le recalage entre la première image et la deuxième image ; et
dériver des paramètres de transformation représentant chaque groupe comme pluralité d'ensembles des premiers paramètres de transformation.

5. Appareil de traitement d'images selon la revendication 1,
dans lequel le processeur est configuré pour dériver la pluralité d'ensembles des premiers paramètres de transformation en effectuant le recalage entre la première image et la deuxième image en utilisant une pluralité de méthodes différentes.

6. Appareil de traitement d'images selon la revendication 1,
dans lequel le processeur est configuré pour définir chacun d'une pluralité d'ensembles différents de paramètres de transformation initiaux et de plages de recherche et pour dériver la pluralité d'ensembles des premiers paramètres de transformation en effectuant de manière répétée le recalage entre la première image et la deuxième image.

7. Appareil de traitement d'images selon l'une quelconque des revendications 1 à 6,
dans lequel la première image est une image médicale tridimensionnelle capturée avant une intervention chirurgicale.

8. Appareil de traitement d'images selon l'une quelconque des revendications 1 à 7, dans lequel la deuxième image est une image médicale bidimensionnelle capturée pendant une intervention chirurgicale.

9. Appareil de traitement d'images selon la revendication 1,
dans lequel la région d'intérêt est une région d'une partie bronchique principale d'une bronche, une région d'une artère pulmonaire, un contour d'un champ pulmonaire ou une région d'un nodule pulmonaire.

10. Procédé de traitement d'images pour exécuter un processus par un processeur inclus dans un appareil de traitement d'images, le processus comprenant :
acquérir une première image et une deuxième image différente de la première image et ayant une plage d'imagerie dont au moins une partie chevauche une plage d'imagerie de la première image ;
dériver un premier paramètre de transformation pour projeter la première image sur un espace d'image de la deuxième image en effectuant un recalage entre la première image et la deuxième image ;
effectuer un contrôle consistant à afficher une première image composite dans laquelle la première image est superposée sur la deuxième image en utilisant le premier paramètre de transformation ;
recevoir une entrée utilisateur représentant la validité de la première image composite ;
acquérir un deuxième paramètre de transformation différent du premier paramètre de transformation dans un cas où l'entrée utilisateur représente que la première image composite n'est pas valide ; et
effectuer un contrôle consistant à afficher une deuxième image composite obtenue en composant une pluralité d'images en utilisant un ou plusieurs parmi le premier paramètre de transformation et le deuxième paramètre de transformation, dans lequel le processeur est configuré pour :
générer la première image composite dans laquelle une ou plusieurs régions d'intérêt incluses dans la première image sont superposées sur la deuxième image en utilisant le premier paramètre de transformation ;
effectuer un contrôle consistant à afficher la région d'intérêt dans la première image composite dans un aspect d'affichage dans lequel la région d'intérêt est identifiable ;
dériver une pluralité d'ensembles des premiers paramètres de transformation en effectuant le recalage entre la première image et la deuxième image ;
sélectionner un premier paramètre de transformation parmi la pluralité d'ensembles dérivés des premiers paramètres de transformation ;
effectuer le contrôle consistant à afficher la première image composite dans laquelle la première image est superposée sur la deuxième image en utilisant le premier paramètre de transformation sélectionné ; et
acquérir le deuxième paramètre de transformation différent du premier paramètre de transformation parmi la pluralité d'ensembles des premiers paramètres de transformation dans un cas où l'entrée utilisateur représente que la première image composite n'est pas valide ;
dans lequel le processeur est en outre configuré pour :
effectuer un contrôle consistant à afficher une troisième image composite dans laquelle la première image est superposée sur la deuxième image en utilisant un ou plusieurs paramètres de transformation autres que le premier paramètre de transformation utilisé pour générer la première image composite parmi la pluralité d'ensembles des premiers paramètres de transformation dans un cas où l'entrée utilisateur représente que la première image composite n'est pas valide ; et
acquérir le paramètre de transformation utilisé pour générer la troisième image composite sélectionnée par un utilisateur comme deuxième paramètre de transformation, et
effectuer, dans le contrôle consistant à afficher la troisième image composite, un contrôle consistant à afficher des informations représentant une différence entre la première image composite et la troisième image composite.

11. Support de stockage lisible par ordinateur stockant un programme de traitement d'images pour amener un processeur inclus dans un appareil de traitement d'images à exécuter un processus comprenant :
acquérir une première image et une deuxième image différente de la première image et ayant une plage d'imagerie dont au moins une partie chevauche une plage d'imagerie de la première image ;
dériver un premier paramètre de transformation pour projeter la première image sur un espace d'image de la deuxième image en effectuant un recalage entre la première image et la deuxième image ;
effectuer un contrôle consistant à afficher une première image composite dans laquelle la première image est superposée sur la deuxième image en utilisant le premier paramètre de transformation ;
recevoir une entrée utilisateur représentant la validité de la première image composite ;
acquérir un deuxième paramètre de transformation différent du premier paramètre de transformation dans un cas où l'entrée utilisateur représente que la première image composite n'est pas valide ; et
effectuer un contrôle consistant à afficher une deuxième image composite obtenue en composant une pluralité d'images en utilisant un ou plusieurs parmi le premier paramètre de transformation et le deuxième paramètre de transformation, dans lequel le processeur est configuré pour :
générer la première image composite dans laquelle une ou plusieurs régions d'intérêt incluses dans la première image sont superposées sur la deuxième image en utilisant le premier paramètre de transformation ;
effectuer un contrôle consistant à afficher la région d'intérêt dans la première image composite dans un aspect d'affichage dans lequel la région d'intérêt est identifiable ;
dériver une pluralité d'ensembles des premiers paramètres de transformation en effectuant le recalage entre la première image et la deuxième image ;
sélectionner un premier paramètre de transformation parmi la pluralité d'ensembles dérivés des premiers paramètres de transformation ;
effectuer le contrôle consistant à afficher la première image composite dans laquelle la première image est superposée sur la deuxième image en utilisant le premier paramètre de transformation sélectionné ; et
acquérir le deuxième paramètre de transformation différent du premier paramètre de transformation parmi la pluralité d'ensembles des premiers paramètres de transformation dans un cas où l'entrée utilisateur représente que la première image composite n'est pas valide ;
dans lequel le processeur est en outre configuré pour :
effectuer un contrôle consistant à afficher une troisième image composite dans laquelle la première image est superposée sur la deuxième image en utilisant un ou plusieurs paramètres de transformation autres que le premier paramètre de transformation utilisé pour générer la première image composite parmi la pluralité d'ensembles des premiers paramètres de transformation dans un cas où l'entrée utilisateur représente que la première image composite n'est pas valide ; et
acquérir le paramètre de transformation utilisé pour générer la troisième image composite sélectionnée par un utilisateur comme deuxième paramètre de transformation, et
effectuer, dans le contrôle consistant à afficher la troisième image composite, un contrôle consistant à afficher des informations représentant une différence entre la première image composite et la troisième image composite.
